(19) Europäisches Patentamt / European Patent Office / Office européen des brevets

(11) **EP 4 015 139 A1**

(12) **EUROPEAN PATENT APPLICATION**
published in accordance with Art. 153(4) EPC

(43) Date of publication:
**22.06.2022 Bulletin 2022/25**

(21) Application number: **20852664.0**

(22) Date of filing: **14.08.2020**

(51) International Patent Classification (IPC):
**B23Q 1/44** $^{(2006.01)}$ **B23Q 3/06** $^{(2006.01)}$

(52) Cooperative Patent Classification (CPC):
**B23Q 1/44; B23Q 3/06**

(86) International application number:
**PCT/CN2020/109114**

(87) International publication number:
**WO 2021/027915 (18.02.2021 Gazette 2021/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.08.2019 CN 201910754540**

(71) Applicant: **Kede Numerical Control Co., Ltd.
Dalian, Liaoning 116000 (CN)**

(72) Inventors:
• **CHEN, Hu**
**Dalian, Liaoning 116000 (CN)**
• **LIU, Huijie**
**Dalian, Liaoning 116000 (CN)**
• **LIU, Jingwen**
**Dalian, Liaoning 116000 (CN)**
• **JIANG, Wenbin**
**Dalian, Liaoning 116000 (CN)**
• **HUANG, Yutong**
**Dalian, Liaoning 116000 (CN)**

(74) Representative: **JD&P Patent Attorneys
Joanna Dargiewicz & Partners
Ul. Mysliborska 93A/50
03-185 Warszawa (PL)**

(54) **CONNECTING ROD ROTARY TABLE AND DECOUPLING CONTROL METHOD THEREOF**

(57) A decoupling control method for linkage turntable in the technical field of associative motion control mechanisms. Steps of the technical solution are as follows: measure a length L of a hypotenuse of a triangular structure; convert A-axis coordinates input to the system into ZO-axis coordinates according to $Z0=L*\cos\alpha$ and input them on ZO-axis; and in the case of a speed control method, convert the A-axis coordinates into a periodic displacement of Z0 according to $\Delta Z0=L*(\cos\alpha_1-\cos\alpha_2)$, and input the displacement to ZO-axis. The beneficial effect is that the horizontal displacement generated by the movement of the ZO-axis is directly integrated into the closed loop of the X-axis by means of measurement combination and the displacement directly calculated by grating scale has high precision and no delay, and it is possible to achieve a more effective control level on this mechanical structure. In addition, the optimized control algorithm makes the X-axis have the motion characteristics of RTCP in the process of A-axis rotation, thereby reducing the requirements for the dynamic performance of the X-axis motor.

FIG. 5

**Description**

TECHNICAL FIELD

The present invention belongs to the technical field of associative motion control mechanisms, and particularly, relates to a linkage turntable and a decoupling control method thereof.

BACKGROUND ART

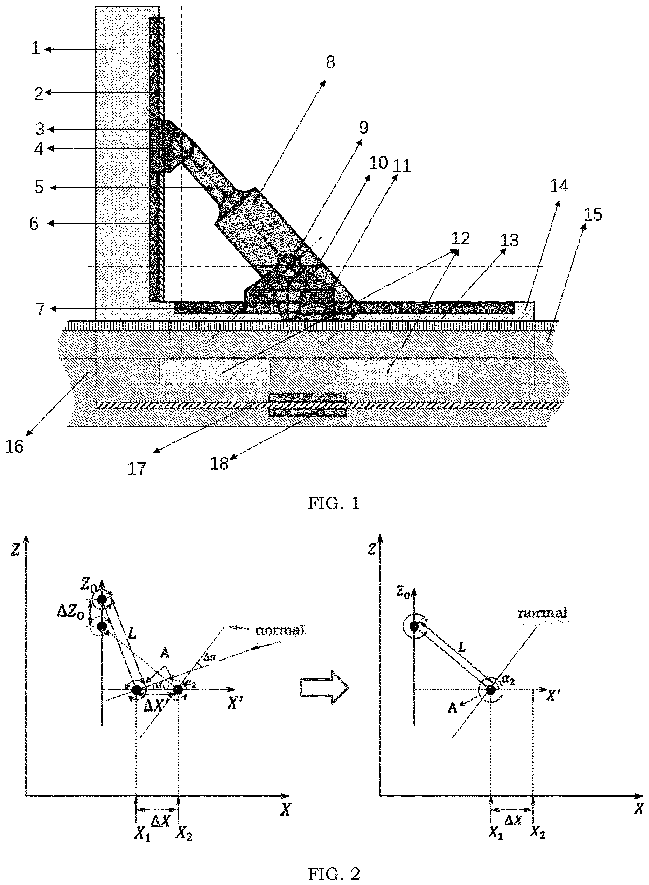

The main application case of control method for linkage decoupling is a Chinese patent application whose application number is CN201810806333.1, applicant is KEDE CNC Co., Ltd., and name is a cradle turntable driven by ball screw, and the simplified motion process of the structure is shown in FIG. 2.

According to the traditional control method, the axis movement in two directions is independently controlled. Assuming that the vertical direction is ZO-axis, the horizontal direction is X-axis, the horizontal sliding mechanism of the turntable is X', and the swing mechanism of the turntable is A-axis, then, the grating scale of ZO-axis is mounted on the turntable base, with the direction parallel to the guide rail in the vertical direction of ZO-axis; the ZO-axis reading head is mounted on the Z-axis screw nut; the X-axis grating scale is mounted on the bed, with the direction parallel to the X-axis guide rail; and the X-axis reading head is mounted on the turntable base and displaces horizontally with the turntable machine tool. This traditional mounting method has the following defects when a control is exerted:

> 1. additional calculation is required to calculate the turntable horizontal displacement $\Delta X'$ caused by ZO-axis when dragging the turntable;
> 2. the value calculated by the turntable horizontal instantaneous displacement usually has a certain delay and error, which are combined with the X-axis command, and the expression position is not accurate enough, causing an adverse effect on the accuracy;
> 3. the change is relatively large as compared with the control method of ordinary linear axis, and the application is more complicated; and the A-axis and X-axis have a mutual coupling relation in the control algorithm.

SUMMARY OF INVENTION

In order to solve the above-mentioned problems in the prior art, the present invention proposes a linkage turntable and a decoupling control method thereof, so that the dynamic performance requirements of the X-axis are reduced to some extent and there is no need to manually calculate the horizontal displacement $\Delta X'$ of the turntable caused by the ZO-axis, thereby improving the control accuracy.

The technical solution is as follows.

A linkage turntable, including: a turntable column; a linkage turntable; an X-axis grating scale reading head; an X-axis grating scale; a turntable base; a sliding mechanism A; and a sliding mechanism B, wherein the turntable column is vertically mounted on the turntable base, the linkage turntable is slidably connected to the turntable column through the sliding mechanism A, the linkage turntable is slidably connected to the turntable base through the sliding mechanism B, the X-axis grating scale reading head is mounted on the sliding mechanism B, and the X-axis grating scale is mounted below the turntable base and arranged opposite to the X-axis grating scale reading head.

Further, the sliding mechanism A includes: a ZO-axis ball screw; a ZO-axis ram; a first rotation node of linkage mechanism; a linkage of linkage mechanism; and a ZO-axis guide rail, the ZO-axis guide rail is arranged on the turntable column, the ZO-axis ball screw is connected to the ZO-axis guide rail, the ZO-axis ram is slidably connected to the ZO-axis guide rail, one end of the linkage of linkage mechanism is rotatably connected to the ZO-axis ram through the first rotation node of linkage mechanism, and the other end of the linkage of linkage mechanism is connected to the linkage turntable.

Further, the sliding mechanism B includes: a horizontal guide rail; a second rotation node of linkage mechanism; and a horizontal ram, wherein the horizontal guide rail is arranged on the turntable base, the linkage turntable is rotatably connected to the horizontal ram through the second rotation node of linkage mechanism, the horizontal ram is slidably connected to the horizontal guide rail, and the X-axis grating scale reading head is mounted on the horizontal ram.

The linkage turntable further includes: a linkage turntable ram; a bed; a turntable guide rail; a turntable drag screw; and a turntable drag nut, wherein the bed is provided with the turntable guide rail, the turntable drag screw and the linkage turntable ram, the linkage turntable ram is slidably connected to the turntable guide rail, and the turntable drag nut is arranged on the turntable drag screw.

The present invention also includes a decoupling control method for linkage turntable, including the following steps:

> S1. measure a length L of a hypotenuse of a triangular structure; and
> S2. convert A-axis coordinates input to the system into ZO-axis coordinates according to

$$Z0 = L * cos\alpha$$

> and input them on ZO-axis, wherein Z0 represents the length of the nut position of ZO-axis relative to the reference point of ZO-axis, and the reference point is located at the intersection of the extension lines of the displacement trajectories of the two rotation nodes of the linkage mechanism, and $\alpha$ represents the angle of the turntable, that is, the angle between the turntable normal and the positive direction of the X'-axis;

and in the case of a speed control method, convert the A-axis coordinates into a periodic displacement of Z0 according to

$$\Delta Z0 = L * (\cos\alpha_1 - \cos\alpha_2)$$

and input the displacement to ZO-axis, wherein $\Delta Z0$ indicates the displacement of ZO-axis, $\alpha_1$ indicates the angle of the turntable before moving, and $\alpha_2$ indicates the angle of the turntable after moving.

Further, the linkage turntable is assembled before measuring the length L of the hypotenuse of the triangular structure, and the assembly steps include:

SO.1. mount the X-axis grating scale parallel to the X-axis on the bed;
SO.2. align the X-axis grating scale reading head with the X-axis grating scale, fix the X-axis grating scale reading head on the horizontal ram, and repeatedly move the linkage turntable horizontally to check the readings; and
SO.3. mount the circular grating of the linkage turntable coaxially facing the A-axis rotation center.

Further, the steps of obtaining the length L of the hypotenuse of the triangular structure include:

moving Z0 to the first position, recording the Z0 coordinate $Z0_1$, the A-axis angle $\alpha_1$; moving Z0 to the second position, recording the Z0 coordinate $Z0_2$, the turntable angle $\alpha_2$, and using the following equation:

$$L*\cos\alpha_1 - L*\cos\alpha_2 = Z0_1 - Z0_2$$

to obtain the length L of the hypotenuse of the triangular structure:

$$L = \Delta Z0 / (\cos\alpha_1 - \cos\alpha_2).$$

Further, the detailed steps of step S2 are as follows:

S2.1. a command A0, that is, $\Delta\alpha$, is sent to a Z0 controller; and a command X is sent to an X-axis controller;
S2.2. the Z0 controller calculates the distance $\Delta\alpha$ that the A-axis needs to travel in the next cycle according to the command and the feedback of the A-axis angle, and the command angle $\Delta\alpha$ sent out includes a tracking error and a speed feedforward;
and the AO-axis controller calculates the distance $\Delta\alpha$ that the A-axis needs to travel in the next cycle according to the command and the feedback of the A-axis angle, and the command angle $\Delta\alpha$ sent out includes a tracking error and a speed feedforward;
and the X-axis performs the same process;
S2.3. before $\Delta\alpha$ is input to the Z0 actuator, $\Delta\alpha$ is converted into the current straight-line distance $\Delta Z0$ to be traveled by Z0 according to the equation $\Delta Z0 = L(\cos\alpha_1 - \cos(\alpha_1 + \Delta\alpha))$, and then a command is sent to the Z0 actuator; and $\Delta X$ is sent to the X-axis actuator;
S2.4, the Z0 actuator drives the turntable linkage mechanism to generate the A-axis swing angle change $\Delta\alpha'$ and the X-axis direction horizontal displacement $\Delta X'$, $\Delta\alpha'$ is used to participate in the closed-loop operation of the next cycle; the X-axis actuator also generates a displacement $\Delta X_0$, $\Delta X_0$ and the horizontal displacement $\Delta X'$ generated by the turntable linkage mechanism are combined to participate in the closed-loop operation of the next cycle; and S2.5. execute steps S2.1 to S2.4 periodically and cyclically.

The beneficial effect of the present invention is as follows.

The beneficial effects of the linkage turntable and the decoupling control method thereof described in the present invention are as follows. In the traditional control method, the closed-loop controls of ZO-axis and X-axis are irrelevant, and it is necessary to manually calculate the displacement in the horizontal direction, and then manually add the displacement in the horizontal direction to the X-axis command. In addition to the errors generated due to the calculation, there is also a large delay here. However, after changing the control algorithm, the horizontal displacement generated by the movement of the ZO-axis is directly integrated into the closed loop of the X-axis by means of measurement combination and the displacement directly calculated by grating scale has high precision and no delay, and it is possible to achieve a more effective control level on this mechanical structure.

In addition, the optimized control algorithm makes the X-axis have the motion characteristics of RTCP in the process of A-axis rotation, thereby reducing the requirements for the dynamic performance of the X-axis motor.

BRIEF DESCRIPTION OF DRAWINGS

FIG. 1 is the structure schematic diagram of the linkage turntable of the present invention.
FIG. 2 is a schematic diagram of a simplified motion process of a solution structure related to the prior art.
FIG. 3 is an algorithm diagram of a traditional control.
FIG. 4 is a schematic diagram of a decoupling control algorithm of the present invention.
FIG. 5 is a control flowchart of the decoupling control algorithm of the present invention.

Description of reference signs: 1-turntable column; 2-Z0-axis ball screw; 3-Z0-axis ram; 4-the first rotation node of linkage mechanism; 5-linkage of linkage mechanism; 6-Z0-axis guide rail; 7-horizontal guide rail; 8-linkage turntable; 9-the second rotation node of linkage mechanism; 10-X-axis grating scale reading head; 11-horizontal ram; 12-linkage turntable ram; 13-X-axis grating scale; 14-turntable base; 15-bed; 16-turntable guide rail; 17-turntable drag screw; 18-turntable drag nut.

DESCRIPTION OF EMBODIMENTS

The linkage turntable and the decoupling control method thereof will be further described below with reference to FIGS 1-5.

Embodiment 1

A linkage turntable, including: a turntable column 1; a linkage turntable 8; an X-axis grating scale reading head 10; an X-axis grating scale 13; a turntable base 14; a sliding mechanism A; and a sliding mechanism B, wherein the turntable column 1 is vertically mounted on the turntable base 14, the linkage turntable 8 is slidably connected to the turntable column 1 through the sliding mechanism A, the linkage turntable 8 is slidably connected to the turntable base 14 through the sliding mechanism B, the X-axis grating scale reading head 10 is mounted on the sliding mechanism B, and the X-axis grating scale 13 is mounted below the turntable base 14, fixed to the bed and arranged opposite to the X-axis grating scale reading head 10.

Further, the sliding mechanism A includes: a Z0-axis ball screw 2; a Z0-axis ram 3; a first rotation node of linkage mechanism 4; a linkage of linkage mechanism 5; and a Z0-axis guide rail 6, the Z0-axis guide rail 6 is arranged on the turntable column 1, the Z0-axis ball screw 2 is connected to the Z0-axis guide rail 6, the Z0-axis ram 3 is slidably connected to the Z0-axis guide rail 6, one end of the linkage of linkage mechanism 5 is rotatably connected to the Z0-axis ram 3 through the first rotation node of linkage mechanism 4, and the other end of the linkage of linkage mechanism 5 is connected to the linkage turntable 8.

Further, the sliding mechanism B includes: a horizontal guide rail 7; a second rotation node of linkage mechanism 9; and a horizontal ram 11, wherein the horizontal guide rail 7 is arranged on the turntable base 14, the linkage turntable 8 is rotatably connected to the horizontal ram 11 through the second rotation node of linkage mechanism 9, the horizontal ram 11 is slidably connected to the horizontal guide rail 7, and the X-axis grating scale reading head 10 is mounted on the horizontal ram 11.

The linkage turntable further includes: a linkage turntable ram 12; a bed 15; a turntable guide rail 16; a turntable drag screw 17; and a turntable drag nut 18, wherein the bed 15 is provided with the turntable guide rail 16, the turntable drag screw 17 and the linkage turntable ram 12, the linkage turntable ram 12 is slidably connected to the turntable guide rail 16, the turntable drag nut 18 is arranged on the turntable drag screw 17, and the linkage turntable ram 12 is fixed on the turntable base 14 and is then slidably connected to the turntable guide rail 16 on the bed 15.

A decoupling control method for linkage turntable, including:

S1. measure a length L of a hypotenuse of a triangular structure; and
S2. convert A-axis coordinates input to the system into Z0-axis coordinates according to

$$Z0 = L * cos\alpha$$

and input them on Z0-axis, wherein Z0 represents the length of the nut position of Z0-axis relative to the reference point of Z0-axis, and the reference point is located at the intersection of the extension lines of the displacement trajectories of the two rotation nodes of the linkage mechanism, and $\alpha$ represents the angle of the turntable, that is, the angle between the turntable normal and the positive direction of the X'-axis;
and in the case of a speed control method, convert the A-axis coordinates into a periodic displacement of Z0 according to

$$\Delta Z0 = L * (\cos\alpha_1 - \cos\alpha_2)$$

and input the displacement to Z0-axis, wherein $\Delta Z0$ indicates the displacement of Z0-axis, $\alpha_1$ indicates the angle of the turntable before moving, and $\alpha_2$ indicates the angle of the turntable after moving.

Further, the linkage turntable is assembled before measuring the length L of the hypotenuse of the triangular structure, and the assembly steps include:

SO.1. mount the X-axis grating scale parallel to the X-axis on the bed;
SO.2. align the X-axis grating scale reading head with the X-axis grating scale, fix the X-axis grating scale reading head on the horizontal ram, and repeatedly move the linkage turntable horizontally to check the readings; and
SO.3. mount the circular grating of the linkage turntable coaxially facing the A-axis rotation center.

Further, the steps of obtaining the length L of the hypotenuse of the triangular structure include:

moving Z0 to the first position, recording the Z0 coordinate $Z0_1$, the A-axis angle $\alpha_1$; moving Z0 to the second position, recording the Z0 coordinate $Z0_2$, the turntable angle $\alpha_2$, and using the following equation:

$$L*\cos\alpha_1 - L*\cos\alpha_2 = Z0_1 - Z0_2$$

to obtain the length L of the hypotenuse of the triangular structure:

$$L = \Delta Z0 / (\cos\alpha_1 - \cos\alpha_2).$$

Further, the detailed steps of step S2 are as follows:

S2.1. a command A0, that is, $\Delta\alpha$, is sent to a Z0 controller; and a command X is sent to an X-axis controller;

S2.2. the Z0 controller calculates the distance $\Delta\alpha$ that the A-axis needs to travel in the next cycle according to the command and the feedback of the A-axis angle, and the command angle $\Delta\alpha$ sent out includes a tracking error and a speed feedforward; and the AO-axis controller calculates the distance $\Delta\alpha$ that the A-axis needs to travel in the next cycle according to the command and the feedback of the A-axis angle, and the command angle $\Delta\alpha$ sent out includes a tracking error and a speed feedforward; and the X-axis performs the same process;

S2.3. before $\Delta\alpha$ is input to the Z0 actuator, $\Delta\alpha$ is converted into the current straight-line distance $\Delta Z0$ to be traveled by Z0 according to the equation $\Delta Z0 = L(\cos\alpha_1 - \cos(\alpha_1 + \Delta\alpha))$, and then a command is sent to the Z0 actuator; and $\Delta X$ is sent to the X-axis actuator;

S2.4, the Z0 actuator drives the turntable linkage mechanism to generate the A-axis swing angle change $\Delta\alpha'$ and the X-axis direction horizontal displacement $\Delta X'$, $\Delta\alpha'$ is used to participate in the closed-loop operation of the next cycle; the X-axis actuator also generates a displacement $\Delta X_0$, $\Delta X_0$ and the horizontal displacement $\Delta X'$ generated by the turntable linkage mechanism are combined to participate in the closed-loop operation of the next cycle; and

S2.5. execute steps S2.1 to S2.4 periodically and cyclically.

Embodiment 2

Compared with the traditional control scheme, the modification is convenient and fast in the control method proposed in the present application, with low cost and obvious effect. The implementation of the technical solution described in this application only needs to refit the reading head of the X-axis from the turntable base to a turntable support slider.

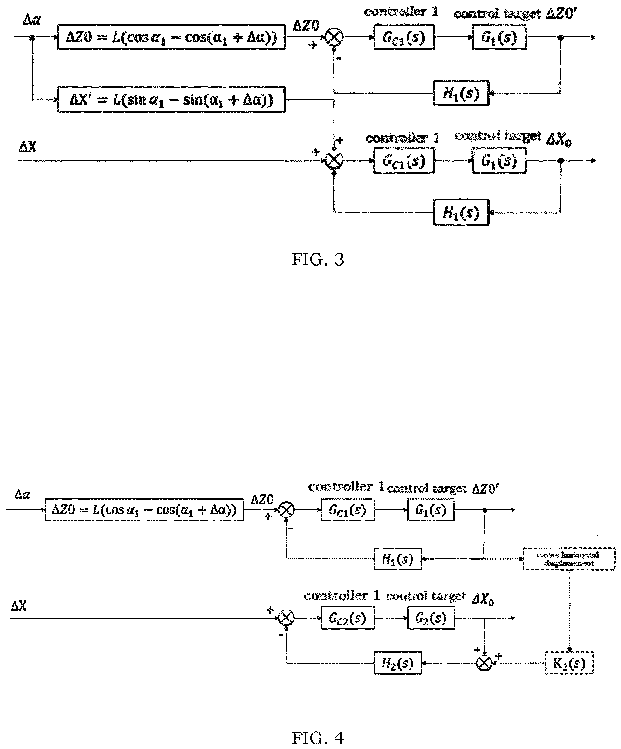

The traditional control method is expressed on the algorithm schematic diagram shown in FIG. 3.

The schematic diagram of the control scheme mentioned in this application is shown in FIG. 4.

It should be noted that the dotted line part in the figure does not require additional implementation, only the mounting position of the X-axis reading head needs to be changed, and the X-axis control algorithm does not need to be changed.

In the traditional control algorithm, the displacement in the horizontal direction needs to be calculated according to Z0 and added to the command X, but here, since the reading head is mounted on the turntable support slider, for the horizontal displacement of the turntable caused by the movement of the ZO-axis, the real-time feedback displacement can be fed back to the closed loop of the X-axis through the grating scale (or other measuring device) in real time.

Assuming that the command X of the X-axis remains unchanged, it can be automatically realized that the horizontal center of the turntable remains unchanged during the ZO-axis dragging the turntable, that is, the left side of the X of the A-axis rotation center is always X1 in FIG. 2.

The unique advantages of this control structure are summarized as follows:

1. Since the horizontal displacement of the turntable is measured by the grating scale, the part of calculating the horizontal displacement is omitted and manpower is saved.

2. Since the horizontal displacement of the turntable is measured by the grating scale, it is possible to ensure the real-time and accuracy of the value, and ensure the accuracy of the control.

3. In practical applications, since the reading head is mounted on the turntable support slider, the horizontal displacement generated by the turntable will be automatically added to the horizontal displacement feedback of the X-axis, and there is no need to make any changes to the control algorithm of the X-axis, thereby also saving manpower.

Steps of implementation

Assembly:

1. mount the grating scale parallel to the X-axis on the bed, and proceed to Step 2 after checking that there is no mistake;

2. align the X-axis grating scale reading head with the grating scale, fix it on the support slider of the horizontal turntable, and move the turntable horizontally repeatedly to check that the reading is normal and then proceed to Step 3; and

3. mount the circular grating of the turntable coaxially facing the A-axis rotation center, and proceed to Step 4 after checking that there is no mistake repeatedly.

Measurement:

4. measure the length of the hypotenuse of the triangular structure, move Z0 repeatedly after measuring the length, and verify whether the length of the hypotenuse, the A-axis angle and the Z0 coordinate can be perfectly matched to form a triangle, and proceed to Step 6 after completing the measurement, and if there are large differences among the triangles calculated at each position, the assembly should be rechecked and the implement should be restarted from Step 1, and if there is no accurate measuring device, proceed to Step 5;

5. move Z0 to the first position, record the Z0 coordinate $Z0_1$, the A-axis angle $\alpha_1$, and move Z0 to the second position, record the Z0 coordinate $Z0_2$, the turntable angle $\alpha_2$, and since the turntable mechanical structure is mounted at a right angle, the length of the hypotenuse can be calculated according to the following equations, assuming that the length of the hypotenuse is L:

$$L * \cos \alpha_1 - L * \cos \alpha_2 = Z0_1 - Z0_2$$

$$L = \Delta Z0/(\cos \alpha_1 - \cos \alpha_2)$$

and when calculating the result, a few more positions should be obtained to verify whether the calculated L is correct, and if the L values of repeated calculations are quite different, it means that the result of the mechanical assembly is not a right angle, and then the mechanical assembly should be checked carefully, and the implementation should be restarted from Step 1, and if it is considered that the calculated hypotenuse length is accurate enough, proceed to Step 6.

Algorithm:

6. change the A-axis control method of the system, convert A-axis coordinates input to the system into Z0-axis coordinates according to the following

$Z0=L*\sin\alpha$, and input them on the Z0-axis, and in the case of a speed control method, convert the A-axis coordinates into a periodic displacement (that is, speed) of Z0 according to

$$\Delta Z0 = L * (\cos \alpha_1 - \cos \alpha_2)$$

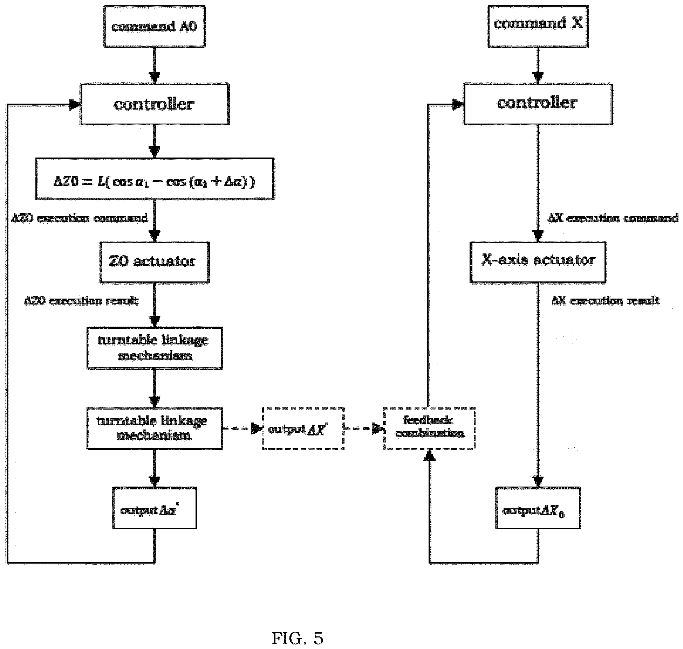

and input the displacement to the Z0-axis, and other axes do not need to be changed,
and the flowchart of linkage decoupling control is shown in FIG. 5,
and the steps are as follows:

1. a command A0, that is, $\Delta\alpha$, is sent to a Z0 controller; and a command X is sent to an X-axis controller;

2. the A0 controller calculates the distance $\Delta\alpha$ that the A-axis needs to travel in the next cycle according to the command and the feedback of the A-axis angle, and the command angle $\Delta\alpha$ sent out includes a tracking error and a speed feedforward; and the same applies to $\Delta X$;

3. before $\Delta\alpha$ is input to the Z0 actuator, $\Delta\alpha$ is converted into the current straight-line distance $\Delta Z0$ to be traveled by Z0 according to the equation, and then a command is sent to the Z0 actuator, which is generally a servo motor, a frequency converter, or other actuator; and $\Delta X$ is also sent to the X-axis actuator;

4. the Z0 actuator drives the turntable linkage mechanism to generate the A-axis swing angle change $\Delta\alpha'$ and the X-axis direction horizontal displacement $\Delta X'$, $\Delta\alpha'$ is used to participate in the closed-loop operation of the next cycle; the X-axis actuator also generates a displacement $\Delta X_0$, $\Delta X_0$ and the horizontal displacement $\Delta X'$ generated by the turntable linkage mechanism are combined to participate in the closed-loop operation of the next cycle; and

5. execute the steps above periodically and cyclically.

The above description is only a preferred embodiment of the present invention, but the protection scope of the present invention is not limited to this. Any equivalent replacements or changes made by a person skilled in the art within the technical scope disclosed by the present invention according to the technical solution of the present invention and the inventive concept thereof should be within the protection scope of the present invention.

## Claims

1. A linkage turntable, comprising: a turntable column (1); a linkage turntable (8); an X-axis grating scale reading head (10); an X-axis grating scale (13); a turntable base (14); a sliding mechanism A; and a sliding mechanism B, wherein the turntable column (1) is vertically mounted on the turntable base (14), the linkage turntable (8) is slidably connected to the turntable column (1) through the sliding mechanism A, the linkage turntable (8) is slidably connected to the turntable base (14) through the sliding mechanism B, the X-axis grating scale reading head (10) is mounted on the sliding mechanism B, and the X-axis grating scale (13) is mounted below the turntable base (14) and arranged opposite to the X-axis grating scale reading head (10).

2. The linkage turntable according to claim 1, wherein the sliding mechanism A includes: a ZO-axis ball screw (2); a ZO-axis ram (3); a first rotation node of linkage mechanism (4); a linkage of linkage mechanism (5); and a ZO-axis guide rail (6), the ZO-axis guide rail (6) is arranged on the turntable column (1), the ZO-axis ball screw (2) is connected to the ZO-axis guide rail (6), the ZO-axis ram (3) is slidably connected to the ZO-axis guide rail (6), one end of the linkage of linkage mechanism (5) is rotatably connected to the ZO-axis ram (3) through the first rotation node of linkage mechanism (4), and the other end of the linkage of linkage mechanism (5) is connected to the linkage turntable (8).

3. The linkage turntable according to claim 1, wherein the sliding mechanism B includes: a horizontal guide rail (7); a second rotation node of linkage mechanism (9); and a horizontal ram (11), wherein the horizontal guide rail (7) is arranged on the turntable base (14), the linkage turntable (8) is rotatably connected to the horizontal ram (11) through the second rotation node of linkage mechanism (9), the horizontal ram (11) is slidably connected to the horizontal guide rail (7), and the X-axis grating scale reading head (10) is mounted on the horizontal ram (11).

4. The linkage turntable according to claim 1, further comprising: a linkage turntable ram (12); a bed (15); a turntable guide rail (16); a turntable drag screw (17); and a turntable drag nut (18), wherein the bed (15) is provided with the turntable guide rail (16), the turntable drag screw (17) and the linkage turntable ram (12), the linkage turntable ram (12) is slidably connected to the turntable guide rail (16), and the turntable drag nut (18) is arranged on the turntable drag screw (17).

5. A decoupling control method for linkage turntable, comprising:

S1. measure a length L of a hypotenuse of a triangular structure; and
S2. convert A-axis coordinates input to the system into ZO-axis coordinates according to

$$Z0 = L * cos\alpha$$

and input them on ZO-axis, wherein Z0 represents the length of the nut position of ZO-axis relative to the reference point of ZO-axis, and the reference point is located at the intersection of the extension lines of the displacement trajectories of the two rotation nodes of the linkage mechanism, and $\alpha$ represents the angle of the turntable, that is, the angle between the turntable normal and the positive direction of the X'-axis;
and in the case of a speed control method, convert the A-axis coordinates into a periodic displacement of Z0 according to

$$\Delta Z0 = L * (\cos\alpha_1 - \cos\alpha_2)$$

and input the displacement to ZO-axis, wherein $\Delta Z0$ indicates the displacement of ZO-axis, $\alpha_1$ indicates the angle of the turntable before moving, and $\alpha_2$ indicates the angle of the turntable after moving.

6. The decoupling control method for linkage turntable according to claim 5, wherein the linkage turntable is assembled before measuring the length L of the hypotenuse of the triangular structure, and the assembly steps include:

SO.1. mount the X-axis grating scale parallel to the X-axis on the bed;
SO.2. align the X-axis grating scale reading head with the X-axis grating scale, fix the X-axis grating scale reading head on the horizontal ram, and repeatedly move the linkage turntable horizontally to check the readings; and
SO.3. mount the circular grating of the linkage turntable coaxially facing the A-axis rotation center.

7. The decoupling control method for linkage turntable according to claim 5, wherein the steps of obtaining the length L of the hypotenuse of the triangular structure include:
moving Z0 to the first position, recording the Z0 coordinate $Z0_1$, the A-axis angle $\alpha_1$; moving Z0 to the second position, recording the Z0 coordinate $Z0_2$, the turntable angle $\alpha_2$, and using the following equation:

$$L*cos\alpha_1 - L*cos\alpha_2 = Z0_1 - Z0_2$$

to obtain the length L of the hypotenuse of the triangular structure:

$$L = \Delta Z0 / (cos\alpha_1 - cos\alpha_2).$$

8. The decoupling control method for linkage turntable according to claim 5, wherein the detailed steps of step S2 include:

> S2.1. a command A0, that is, $\Delta\alpha$, is sent to a Z0 controller; and a command X is sent to an X-axis controller;
> S2.2. the Z0 controller calculates the distance $\Delta\alpha$ that the A-axis needs to travel in the next cycle according to the command and the feedback of the A-axis angle, and the command angle $\Delta\alpha$ sent out includes a tracking error and a speed feedforward;
> and the AO-axis controller calculates the distance $\Delta\alpha$ that the A-axis needs to travel in the next cycle according to the command and the feedback of the A-axis angle, and the command angle $\Delta\alpha$ sent out includes a tracking error and a speed feedforward; and the X-axis performs the same process;
> S2.3. before $\Delta\alpha$ is input to the Z0 actuator, $\Delta\alpha$ is converted into the current straight-line distance $\Delta Z0$ to be traveled by Z0 according to the equation $\Delta Z0 = L(cos\alpha_1 - cos(\alpha_1 + \Delta\alpha))$, and then a command is sent to the Z0 actuator; and $\Delta X$ is sent to the X-axis actuator;
> S2.4. the Z0 actuator drives the turntable linkage mechanism to generate the A-axis swing angle change $\Delta\alpha'$ and the X-axis direction horizontal displacement $\Delta X'$, $\Delta\alpha'$ is used to participate in the closed-loop operation of the next cycle; the X-axis actuator also generates a displacement $\Delta X_0$, $\Delta X_0$ and the horizontal displacement $\Delta X'$ generated by the turntable linkage mechanism are combined to participate in the closed-loop operation of the next cycle; and
> S2.5. execute steps S2.1 to S2.4 periodically and cyclically.

FIG. 1

FIG. 2

$\Delta\alpha$

$\Delta Z0 = L(\cos\alpha_1 - \cos(\alpha_1 + \Delta\alpha))$   $\Delta Z0$

controller 1   control target $\Delta Z0'$

$G_{C1}(s)$   $G_1(s)$

$\Delta X' = L(\sin\alpha_1 - \sin(\alpha_1 + \Delta\alpha))$

$H_1(s)$

$\Delta X$

controller 1   control target $\Delta X_0$

$G_{C1}(s)$   $G_1(s)$

$H_1(s)$

FIG. 3

$\Delta\alpha$

$\Delta Z0 = L(\cos\alpha_1 - \cos(\alpha_1 + \Delta\alpha))$   $\Delta Z0$

controller 1   control target $\Delta Z0'$

$G_{C1}(s)$   $G_1(s)$

$H_1(s)$

cause horizontal displacement

$\Delta X$

controller 1   control target $\Delta X_0$

$G_{C2}(s)$   $G_2(s)$

$H_2(s)$

$K_2(s)$

FIG. 4

```
command A0                                    command X
    │                                             │
    ▼                                             ▼
controller ◄──┐                              controller ◄──┐
    │         │                                  │         │
    ▼         │                                  │         │
ΔZ0 = L( cos α₁ − cos (α₁ + Δα))                 │         │
    │         │                                  │         │
ΔZ0 execution command                        ΔX execution command
    ▼         │                                  ▼         │
ZO actuator   │                              X-axis actuator│
    │         │                                  │         │
ΔZ0 execution result                         ΔX execution result
    ▼         │                                  │         │
turntable linkage                                │         │
mechanism     │                                  │         │
    │         │                                  │         │
    ▼         │                                  │         │
turntable linkage ┄┄► output ΔX' ┄┄► feedback    │         │
mechanism     │                    combination   │         │
    │         │                        ▲          │         │
    ▼         │                        │          ▼         │
output Δα*    │                        └──── output ΔX₀      │
    └─────────┘                                   └──────────┘
```

$$\Delta Z0 = L(\cos \alpha_1 - \cos(\alpha_1 + \Delta \alpha))$$

FIG. 5

11

## INTERNATIONAL SEARCH REPORT

International application No.

**PCT/CN2020/109114**

### A. CLASSIFICATION OF SUBJECT MATTER

B23Q 1/44(2006.01)i; B23Q 3/06(2006.01)i

According to International Patent Classification (IPC) or to both national classification and IPC

### B. FIELDS SEARCHED

Minimum documentation searched (classification system followed by classification symbols)

B23Q

Documentation searched other than minimum documentation to the extent that such documents are included in the fields searched

Electronic data base consulted during the international search (name of data base and, where practicable, search terms used)

CNABS, CNTXT, CNKI: 转台, 旋转, 工作台, 平台, 连杆, 铰接, 铰链, 光栅, 读数, 角度, 调节, 调整, 高度, 倾斜, 导轨, 滑轨, 轨道, 滑块, 滑枕, 滑板, 传感器; VEN, USTXT, EPTXT, WOTXT: turn+, rotary+, rotat+, table+, turntable, rotary table, connect+ rod+, link+, cradle, angle, adjust+, grating, sensor.

### C. DOCUMENTS CONSIDERED TO BE RELEVANT

| Category* | Citation of document, with indication, where appropriate, of the relevant passages | Relevant to claim No. |
|---|---|---|
| PX | CN 210524442 U (KEDE NUMERICAL CONTROL CO., LTD.) 15 May 2020 (2020-05-15) description paragraphs 23-86, figures 1-5 | 1-8 |
| A | CN 108747436 A (KEDE NUMERICAL CONTROL CO., LTD.) 06 November 2018 (2018-11-06) description paragraphs 35-59, figures 1-4 | 1-8 |
| A | CN 108772717 A (KEDE NUMERICAL CONTROL CO., LTD.) 09 November 2018 (2018-11-09) entire document | 1-8 |
| A | CN 205218598 U (ZHANG, Yanwen) 11 May 2016 (2016-05-11) entire document | 1-8 |
| A | CN 106552967 A (QINCHUAN MACHINE TOOL GROUP CO., LTD.) 05 April 2017 (2017-04-05) entire document | 1-8 |
| A | GB 848464 A (NAT RES DEV.) 14 September 1960 (1960-09-14) entire document | 1-8 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **12 October 2020** | **27 October 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/109114** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2015051493 A (MAKINO MILLING MACHINE) 19 March 2015 (2015-03-19) entire document | 1-8 |

Form PCT/ISA/210 (second sheet) (January 2015)

**INTERNATIONAL SEARCH REPORT**
Information on patent family members

International application No.

**PCT/CN2020/109114**

| Patent document cited in search report | | | Publication date (day/month/year) | Patent family member(s) | | | Publication date (day/month/year) |
|---|---|---|---|---|---|---|---|
| CN | 210524442 | U | 15 May 2020 | None | | | |
| CN | 108747436 | A | 06 November 2018 | None | | | |
| CN | 108772717 | A | 09 November 2018 | None | | | |
| CN | 205218598 | U | 11 May 2016 | None | | | |
| CN | 106552967 | A | 05 April 2017 | CN | 106552967 | B | 20 August 2019 |
| GB | 848464 | A | 14 September 1960 | None | | | |
| JP | 2015051493 | A | 19 March 2015 | JP | 5705283 | B2 | 22 April 2015 |

**EP 4 015 139 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810806333